# FASCICULE DE BREVET EUROPEEN

(11) **EP 3 419 870 B1**
(45) Date de publication et mention de la délivrance du brevet: **14.10.2020**
(21) Numéro de dépôt: 17710776.0
(22) Date de dépôt: 14.02.2017
(51) Int. Cl.: B60T 7/06, G05G 1/32, B60R 21/02, B60R 21/055

(54) **PÉDALIER POUR VÉHICULE AUTOMOBILE**
PEDALEINHEIT FÜR EIN KRAFTFAHRZEUG
PEDAL BOX FOR A MOTOR VEHICLE

(30) Priorité: 26.02.2016 FR 1651589
(43) Date de publication de la demande: 02.01.2019
(73) Titulaire: PSA Automobiles SA, 78300 Poissy (FR)
(72) Inventeur: DEMOINET, Edouard, 90000 Belfort (FR); OLIVEIRA, Emmanuel, 90400 Moval (FR)
(86) Numéro de dépôt international: PCT/FR2017/050335
(87) Numéro de publication internationale: WO 2017/144800

(56) Documents cités:
- EP-A1- 1 129 896
- DE-A1-102008 046 652
- FR-A1- 2 862 263
- FR-A1- 2 876 069
- FR-A1- 2 892 534
- FR-A1- 2 946 002
- FR-A1- 3 010 026

## Description

La présente invention concerne de manière générale un pédalier monté sur un véhicule automobile. Plus particulièrement, la présente invention concerne un pédalier pour véhicule automobile protégeant le pied d'un conducteur en cas de choc frontal.

En effet, en cas d'accident de la circulation et en particulier en cas de choc frontal entre deux véhicules ou entre un véhicule et un obstacle, il est possible que le pied du conducteur du véhicule heurte violement le pédalier du véhicule causant ainsi au conducteur des lésions corporelles au niveau du pied ou de la cheville.

Il est connu dans l'art antérieur des dispositifs permettant de protéger les membres inférieurs d'un occupant du véhicule lors d'un choc frontal.

Le document FR 2862263 divulgue un dispositif destiné à freiner le mouvement vers le haut du pied d'un conducteur lors d'un choc frontal. Le document EP1129896 divulgue un patin en mousse disposé à proximité d'une pédale actionnée au pied. Le patin en mousse présente une cavité dans laquelle la pédale peut être entièrement placée lorsqu'elle est entièrement enfoncée. L'épaisseur du patin en mousse est telle que la surface supérieure du patin de placement du pied de la pédale actionnée au pied est coplanaire avec la surface du patin en mousse lorsque la pédale actionnée au pied est en bout de course de sorte qu'elle puisse supporter un pied appliqué sur le patin de pieds. Le document DE 10 2008 046652 A1 décrit un pédalier pour véhicule automobile correspondant au préambule de la revendication 1.

En contrepartie, ces systèmes présentent notamment l'inconvénient de ne pas protéger le pied d'un choc avec le pédalier lors d'un mouvement du pied vers l'avant.

Un but de la présente invention est de répondre à cet inconvénient du document de l'art antérieur mentionné ci-dessus et en particulier de protéger le pied d'un conducteur d'un choc avec le pédalier du véhicule en cas d'accident impliquant un choc frontal.

Pour cela l'invention concerne un pédalier pour véhicule automobile ayant les caractéristiques de la revendication 1.

Ainsi, il n'est pas nécessaire de prévoir de système de fixation spécifique sur le châssis du véhicule et donc d'alourdir sa conception. De façon alternative, le tampon amortissant peut-être collé sur le module de pédalier.

Le polymère expansé est un matériau peu couteux permet une récupération d'effort optimal durant le choc entre le pied du conducteur et le module de pédalier et autorise ainsi à diminuer grandement le risque de lésion corporelle.

Le pédalier de la présente invention permet donc de protéger efficacement le pied d'un conducteur, en particulier quand le véhicule de celui-ci est impliqué dans un choc frontal. Le contact entre le pied et le pédalier est ainsi amorti par le tampon amortissant, prévenant des lésions corporelles au pied ou à la cheville.

De manière avantageuse, le tampon amortissant comprend au moins deux extensions disposées de part et d'autre de la pédale. Celles-ci permettent de protéger le pied des chocs avec des éléments du module de pédalier situés de part et d'autre de la pédale et évitent également que le pied ne passe sous le tampon amortissant en cas de choc quand la pédale est en position enfoncée.

Conformément à l'invention, le tampon amortissant est fixé au module de pédalier. Ainsi, il n'est pas nécessaire de prévoir de système de fixation spécifique sur le châssis du véhicule et donc d'alourdir sa conception.

Avantageusement, le tampon amortissant recouvre au moins partiellement le module de pédalier et/ou est agencé pour être situé entre le module de pédalier et un siège conducteur du véhicule. Ce positionnement permet un amortissement optimal du contact entre le pied du conducteur et le pédalier puisque le tampon est situé entre le pied et la partie dure et saillante du pédalier. Préférentiellement, le tampon amortissant recouvre entièrement le module de pédalier.

Un second aspect de l'invention est un véhicule automobile comprenant un pédalier selon le premier aspect de l'invention. Un tel véhicule automobile offre ainsi une sécurité optimale à son conducteur.

D'autres caractéristiques et avantages de la présente invention apparaîtront plus clairement à la lecture de la description détaillée qui suit d'un mode de réalisation de l'invention donné à titre d'exemple nullement limitatif et illustré par les dessins annexés, dans lesquels :
- la Figure 1 représente une vue latérale d'un pédalier selon la présente invention en situation avec le pied et la jambe du conducteur,
- la Figure 2 représente une vue de face en transparence d'un pédalier selon la présente invention.

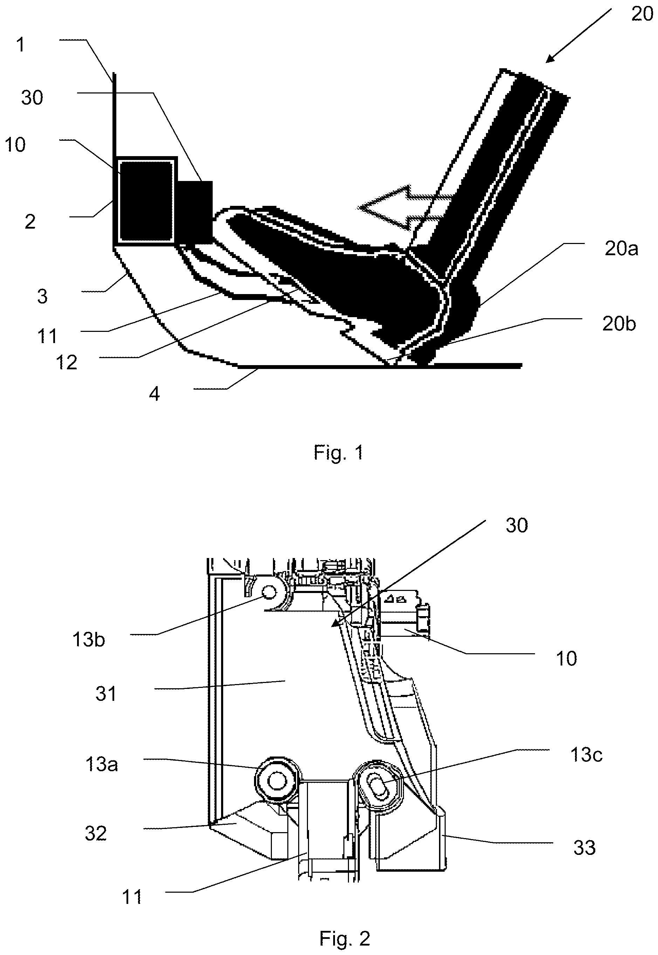

La Figure 1 montre le châssis intérieur 1 d'un véhicule comprenant une partie verticale 2, une partie oblique 3 et une partie horizontale 4 formant un plancher de véhicule. Sur la partie verticale du châssis 2 est fixé un module de pédalier 10 comprenant une pédale 11 munie d'un patin 12. Le pied d'un conducteur 20 est normalement posé sur le patin 12 dans la position 20a (en noir) afin d'actionner la pédale 11 quand ceci est nécessaire, par exemple pour accélérer ou freiner.

Lors d'un choc frontal, le pied 20 du conducteur peut être projeté vers l'avant tel que représenté par la flèche horizontale de la Figure 1, passant ainsi de la position 20a à la position 20b (en blanc). Afin d'éviter un choc brusque avec le module de pédalier 10, un tampon amortissant 30 est placé sur le module de pédalier 10 de façon à amortir le choc et prévenir ainsi des lésions corporelles au pied et à la cheville du conducteur. En d'autres termes, le tampon amortissant 30 est agencé entre le module de pédalier 10 et le siège conducteur (non visible).

Sur la Figure 2, le module de pédalier 10, vu de face, est visible par transparence derrière le tampon amortissant 30 et comprend la pédale 11 ainsi que trois interfaces de fixation 13a, 13b et 13c, permettant par exemple d'introduire des vis ou des écrous pour fixer le module de fixation 10 au châssis 1 du véhicule ou à l'habitacle. Le tampon amortissant 30 comprend une partie principale 31 située au-dessus de la pédale 11 et capable de se monter aux interfaces de fixation 13a, 13b, 13c du module de pédalier 10. Ceci permet de ne pas alourdir la conception du pédalier et/ou du châssis par l'ajout d'interfaces de fixation spécifiques au tampon amortissant 30.

Le tampon amortissant 30 comprend en plus une extension 32 située à gauche de la pédale 11 telle que représentée sur la Figure 2 ainsi qu'une extension 33 située à droite de la pédale 11 telle que représentée sur la Figure 2. Le tampon amortissant 30 est ainsi placé à cheval sur la pédale 11 afin d'éviter les chocs entre les portions du module de pédalier situées de part et d'autre de la pédale 11 et le pied du conducteur.

Le tampon amortissant 30 selon la présente invention peut être fabriqué dans toute matière appropriée et notamment comprendre un polymère expansé tel que du polystyrène ou du polypropylène expansé. De façon alternative, le tampon amortissant peut aussi comprendre du caoutchouc tel que du caoutchouc silicone ou encore des matériaux naturels comme du feutre ou du cuir.

On comprendra que diverses modifications et/ou améliorations évidentes pour l'homme du métier peuvent être apportées aux différents modes de réalisation de l'invention décrits dans la présente description sans sortir du cadre de l'invention défini par les revendications annexées. En particulier, il est fait référence à la forme du tampon amortissant 30, qui peut adopter toute forme adaptée. Enfin, un véhicule automobile équipé de la présente invention peut comprendre d'autres systèmes de sécurité comme des caves à pieds adaptées pour réduire encore les risques de blessures et/ou des coussins gonflables.

## Revendications

1. Pédalier pour véhicule automobile, comprenant :
- un module de pédalier (10) agencé pour être fixé sur un châssis (1) du véhicule et
- au moins une pédale (11) articulée par rapport au module de pédalier pour être commandée par un pied d'un conducteur (20), le pédalier comprenant au moins un tampon amortissant (30) agencé de telle sorte à amortir un contact entre le pied d'un conducteur (20) et le module de pédalier (10) en particulier en cas de choc frontal du véhicule, le tampon amortissant étant fixé au module de pédalier, **caractérisé en ce que** le tampon amortissant est fixé sur des interfaces de fixation (13a, 13b, 13c) du module de pédalier.

2. Pédalier selon la revendication précédente, **caractérisé en ce que** le tampon amortissant (30) comprend au moins deux extensions (32,33) disposées de part et d'autre de la pédale (11).

3. Pédalier selon l'une quelconque des revendications précédentes, **caractérisé en ce que** le tampon amortissant est composé de polymère expansé.

4. Pédalier selon l'un quelconque des revendications précédentes, dans lequel le tampon amortissant (30) recouvre au moins partiellement et de préférence totalement le module de pédalier

5. Pédalier selon l'une quelconque des revendications précédentes dans lequel le tampon amortissant (30) est agencé pour être situé entre le module de pédalier (10) et un siège conducteur du véhicule.

6. Véhicule automobile comportant au moins un pédalier selon l'une quelconque des revendications précédentes.

## Patentansprüche

1. Pedalsystem für ein Kraftfahrzeug, bestehend aus :
- ein Pedalkurbelmodul (10), das so angeordnet ist, dass es an einem Fahrgestell (1) des Fahrzeugs befestigt werden kann, und
- mindestens ein Pedal (11), das in Bezug auf das Pedalmodul gelenkig gelagert ist, das durch den Fuß (20) eines Fahrers gesteuert werden soll,
wobei das Tretlager mindestens ein Dämpfungspolster (30) umfasst, das angeordnet ist, um einen Kontakt zwischen dem Fuß (20) eines Fahrers und dem Tretlagermodul (10) zu dämpfen, insbesondere im Falle eines Frontalaufpralls des Fahrzeugs, **dadurch gekennzeichnet, dass** das Dämpfungspolster an dem Tretlagermodul befestigt ist und dass das Dämpfungspolster an Befestigungsschnittstellen (13a, 13b, 13c) des Tretlagermoduls befestigt ist.

2. Pedalsystem nach dem vorhergehenden Anspruch, **dadurch gekennzeichnet, dass** die Dämpfungsplatte (30) mindestens zwei Verlängerungen (32, 33) aufweist, die auf beiden Seiten des Pedals (11) angeordnet sind.

3. Pedalsystem nach einem der vorstehenden Ansprüche, **dadurch gekennzeichnet, dass** das Dämpfungskissen aus geschäumtem Polymer besteht.

4. Pedalsystem nach einem der vorstehenden Ansprüche, wobei die Dämpfungsplatte (30) das Kettenradgarniturmodul zumindest teilweise und vorzugsweise vollständig bedeckt.

5. Pedalsystem nach einem der vorstehenden Ansprüche, bei der das Dämpfungspolster (30) so angeordnet ist, dass es sich zwischen dem Modul (10) der Kettenradgarnitur und einem Fahrersitz des Fahrzeugs befindet.

6. Kraftfahrzeug mit mindestens einer Pedalsystem gemäß einem der vorstehenden Ansprüche..

## Claims

1. Pedal unit for a motor vehicle, comprising :
- a pedal unit (10) arranged to be fixed to a chassis (1) of the vehicle, and
- at least one pedal (11) hinged to the pedal module to be operated by a driver's foot (20), the bottom bracket comprising at least one damping pad (30) arranged to dampen a contact between a driver's foot (20) and the bottom bracket module (10) in particular in the event of a frontal impact of the vehicle, **characterised in that** the damping pad being fixed to the bottom bracket module, and **in that** the damping pad is fixed to fixing interfaces (13a, 13b, 13c) of the bottom bracket module.

2. Pedal unit according to the preceding claim, **characterised in that** the damping pad (30) comprises at least two extensions (32, 33) arranged on either side of the pedal (11).

3. Pedal unit according to any of the preceding claims, **characterised in that** the damping pad is made of expanded polymer.

4. Pedal unit according to any of the preceding claims, in which the damping pad (30) at least partially and preferably completely covers the Pedal unit module (10), **characterized in that** the damping pad (30) is bonded to the Pedal unit module (10).

5. A pedal unit according to any of the foregoing claims in which the damping pad (30) is arranged to be located between the pedal unit (10) and a driver's seat of the vehicle.

6. A motor vehicle having at least one pedal unit according to one of the preceding claims.
